# EUROPEAN PATENT SPECIFICATION

(11) **EP 2 408 040 B1**
(45) Date of publication and mention of the grant of the patent: **12.06.2019**
(21) Application number: 11173222.8
(22) Date of filing: 08.07.2011
(51) Int. Cl.: H01M 2/10, H01M 2/04, H01M 2/02

(54) **Case for a secondary battery**
Gehäuse für eine Sekundärbatterie
Étui pour batterie secondaire

(30) Priority: 12.07.2010 KR 20100066860
(43) Date of publication of application: 18.01.2012
(73) Proprietor: Samsung SDI Co., Ltd., Gyeonggi-do 17084 (KR)
(72) Inventor: Lee, Sang-Joon, Cheonan-si Chungcheongnam-do (KR)
(74) Representative: Walaski, Jan Filip

(56) References cited:
- EP-A2- 2 166 594
- EP-A2- 2 200 107
- DE-U1-202009 015 040
- JP-A- 2006 228 714

## Description

The present invention relates to a case for a secondary battery and a secondary battery including the same.

As a variety of mobile devices have been widely used in recent years, many studies about secondary batteries used as power suppliers have been conducted.

Secondary batteries include, e.g., a nickel-cadmium battery, a nickel-hydrogen battery, a nickel-zinc battery, and a lithium battery. Secondary batteries may have a basic structure in which a jelly-roll shaped electrode assembly with a separator between an anode and a cathode is sealed in a rectangular or a cylindrical case.

Cases for the secondary batteries may include a cap assembly having an electrode terminal on the top of a case body accommodating the electrode assembly. EP2200107 and EP2166594 relate to secondary batteries having an impact absorber. According to a first aspect of the present invention, there is provided a case for a secondary battery according to claim 1. Optional features are set out in the dependent claims. The invention is directed to a case for a secondary battery according to claim 1.

Embodiments include a case for a secondary battery, the case including a case body, the case body having bottom and a space for receiving an electrode assembly and a shock-absorbing cap, the shock-absorbing cap having a bottom and an edge extending from the bottom of the shock-absorbing cap, the edge being coupled to the bottom of the case body, wherein the shock-absorbing cap includes a sub-shock absorber, the sub-shock absorber being configured to distribute and transmit shock applied to the bottom of the shock-absorbing cap.

The sub-shock absorber may include one or more shock-absorbing grooves on the shock-absorbing cap, the shock-absorbing grooves having a predetermined depth.

The sub-shock absorber may include a plurality of the shock-absorbing grooves at regular intervals.

Each of the plurality of shock-absorbing grooves may have the same area.

The sub-shock absorber may include a plurality of the shock-absorbing grooves, the shock-absorbing grooves being symmetrically disposed at sides of a center of the shock-absorbing cap.

The sub-shock absorber may include a plurality of the shock-absorbing grooves, the shock-absorbing grooves being disposed at opposite side ends of the shock-absorbing cap.

The shock-absorbing cap may further include connection ribs between the shock-absorbing grooves, and the connection ribs and the edges of shock-absorbing cap may contact the bottom of the case body.

The shock-absorbing cap may be made of polycarbonate.

The case for a secondary battery may further include shock-absorbing blocks in the shock-absorbing grooves.

The shock-absorbing blocks may include an elastic body, the elastic body having an elasticity greater than an elasticity of the shock-absorbing case.

The elastic body may include any one of rubber and an adhesive.

The shock-absorbing cap may have a thickness, and the predetermined depth may be about 50 % or less of the thickness of the shock-absorbing cap.

The predetermined depth may be about 0.1 mm to about 0.25 mm.

The shock-absorbing cap may further include one or more connecting protrusions on the edge of the shock-absorbing cap, the connecting protrusions extending along and covering a side of the bottom of the case body.

The connection protrusions may be on a long side of the edge of the shock-absorbing cap.

Embodiments of the invention also include a case for a secondary battery, the case including a case body, the case body having a bottom and a space for receiving and electrode assembly; a shock-absorbing cap, the shock-absorbing cap including a bottom, an edge extending from a side of the bottom of the shock-absorbing cap, the edge being coupled to the bottom of the case body, one or more connecting protrusions extending from long sides of the edge; and a specific shock-absorbing block on top of the shock-absorbing cap.

The shock-absorbing cap may be made of any one of polycarbonate and polypropylene.

The shock-absorbing block may be stacked on top of the shock-absorbing cap.

The shock-absorbing block may be made of a material having an elasticity greater than an elasticity of the shock-absorbing cap.

The shock-absorbing block may include any one of rubber and an adhesive.

At least one of the above and other features and advantages may also be realized by providing a secondary battery including a case for a secondary battery according to an embodiment; an electrode assembly in the case; and a cap assembly connected with the electrode assembly and coupled to an upper end of a case body.

The above and other features and advantages will become more apparent to those of ordinary skill in the art by describing in detail exemplary embodiments with reference to the attached drawings, in which:
FIG. 1 illustrates an exploded perspective view of a case according to an embodiment;
FIG. 2 illustrates a cross-sectional view of an assembled state of the case of FIG. 1;
FIG. 3A illustrates a plan view of a shock-absorbing cap of the case of FIG. 1;
FIG. 3B illustrates a plan view of a modified example of the shock-absorbing cap of FIG. 1;
FIG. 3C illustrates a plan view of another modified example of the shock-absorbing cap of FIG. 1;
FIG. 3D illustrates a plan view of yet another modified example of the shock-absorbing cap of FIG. 1;
FIG. 4 illustrates an exploded perspective view of a case according to another embodiment;
FIG. 5 illustrates a cross-sectional view of an assembled state of the case of FIG. 4;
FIG. 6 illustrates an exploded perspective view of a case according to yet another embodiment;
FIG. 7 illustrates a cross-sectional view of an assembled state of the case of FIG. 6;
FIG. 8 illustrates a cross-sectional view of a case according to still another embodiment;
FIG. 9A illustrates an enlarged cross-sectional view of a modified example of a shock-absorbing cap of FIG. 8; and
FIG. 9B illustrates an enlarged cross-sectional view of another modified example of a shock-absorbing cap of FIG. 8.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

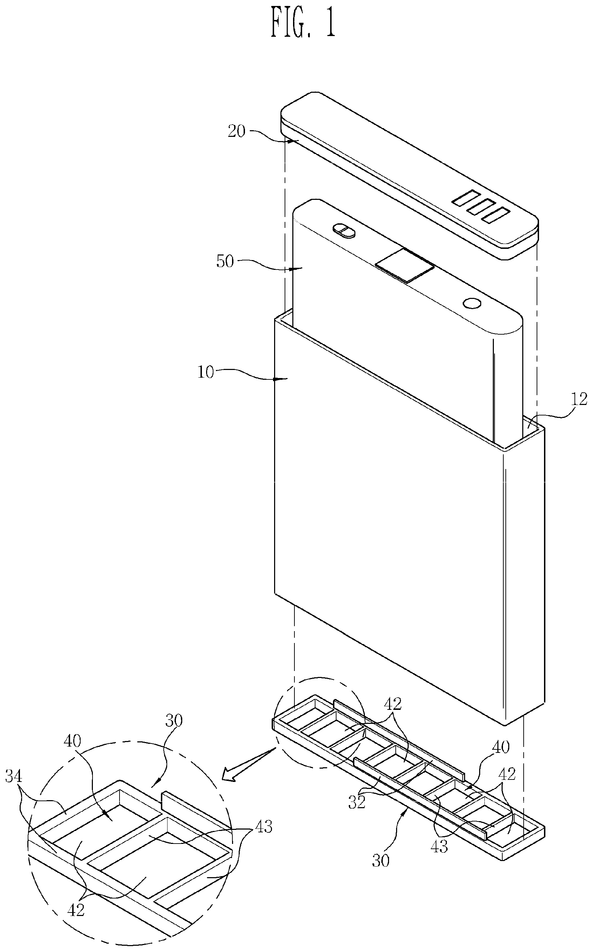

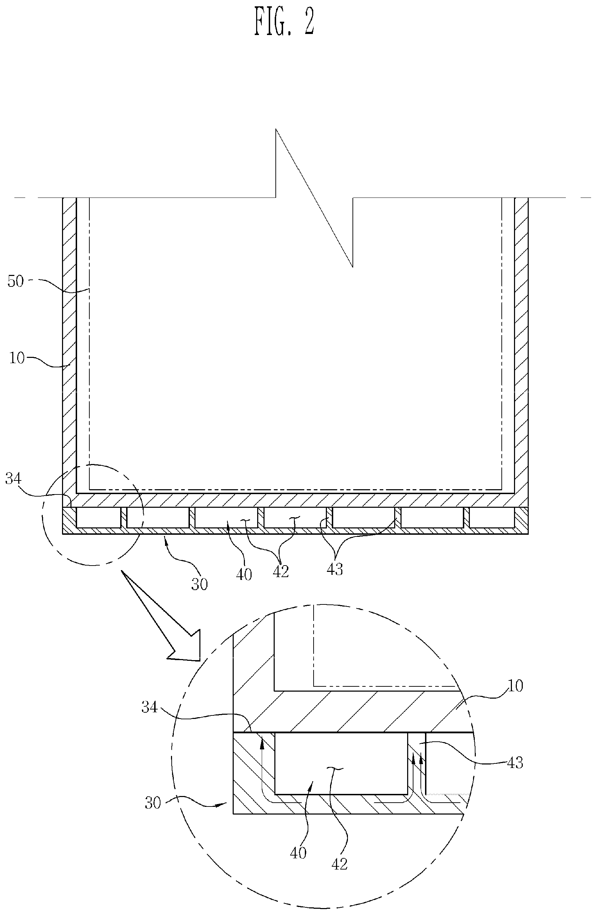

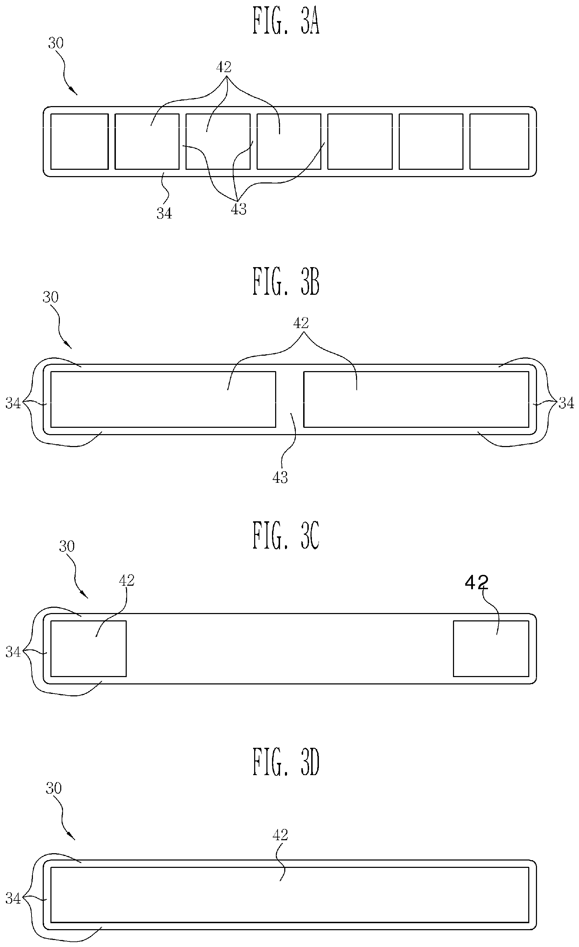

FIG. 1 illustrates an exploded perspective view of a case according to an embodiment. FIG. 2 illustrates a cross-sectional view of an assembled state of the case of FIG. 1. FIGS. 3A to 3D illustrate plan views of modified examples of a shock-absorbing cap of FIG. 1.

As shown in FIGS. 1 and 2, a case for a secondary battery may include a case body 10, a cap assembly 20, and a shock-absorbing cap 30 including a sub-shock absorber 40, which may also be referred to as primary and secondary shock absorbers (30, 40).

The case body 10 may function as a case and an electrode for an electrode assembly 50, it may have a receiving space 12 for receiving the electrode assembly 50 therein, and may have a box shape with a closed bottom and an open top for insertion of the electrode assembly 50.

The case body 10 may have e.g., a cylindrical or rectangular shape in accordance with a desired type of battery; and a rectangular shape is exemplified in the present embodiment.

The electrode assembly 50 may be received in the case body 10 and may substantially generate current in the secondary battery. The electrode assembly 50 may be wound in a jelly-roll shape. The jelly-roll shaped electrode assembly 50 may include an anode plate formed by coating an anode active material on an anode current collector, a cathode plate formed by coating a cathode active material on a cathode current collector, and a separator between the anode plate and the cathode plate to electrically connect them.

The electrode assembly 50 may be connected with the case body 10 and an anode terminal of the cap assembly 20 (described below).

The electrode assembly 50 and the cap assembly 20 may have a structure well-known in the art, and they are not described and shown in the drawings in detail.

The shock-absorbing cap 30 may be attached to the bottom of the case body 10 equipped with the electrode 50 and the cap assembly 20. The shock-absorbing cap 30 may be called a bottom case, but is referred to as the shock-absorbing cap 30 to discriminate from the case body 10 of the secondary battery. The shock-absorbing cap 30 may include an edge 34 extending along a periphery of a bottom thereof.

The shock-absorbing cap 30 may function as a protecting member that covers the bottom of the case body 10 where a relatively large shock may be applied, e.g., when the secondary battery falls on the ground etc. The shock-absorbing case 30 may have a simple plate shape having an area substantially the same as an area of the bottom of the case body 10. A top of the shock-absorbing cap 30 may be in close contact with the bottom of the case body 10.

The shock-absorbing cap 30 may be made of a synthetic resin, e.g., PC (polycarbonate) or PP (polypropylene). However, any suitable materials may be selected and used, as long as they exhibit sufficient shock-absorbing properties.

The shock-absorbing cap 30 may include connecting protrusions 32 at front and rear edges thereof. The connecting protrusions 32 may cover a lower outer or side surface of the case body 10 when the shock-absorbing cap 30 is coupled with the case body 10. The connecting protrusions 32 may extend along long sides of the edge 34 coupled with the case body 10.

It is possible to fix the shock-absorbing cap 30 to the case body 10 by attaching a label tape (not shown) thereto, e.g., to an outer surface of the case body 10 and to the connecting protrusions 32 in this position.

The shock-absorbing cap 30 may include the sub-shock absorber 40 in order to increase shock-absorbing efficiency by transferring shock applied to the shock-absorbing cap 30 to an outer edge thereof. The sub-shock absorber 40 may include a groove or recess (hereafter, referred to as 'shock-absorbing groove 42) on the shock-absorbing cap 30.

For example, the shock-absorbing groove 42 may have a predetermined depth from a top of the shock-absorbing cap 30. A plurality of the shock-absorbing grooves 42 may be arranged at regular intervals along an entire surface of the top of the shock-absorbing cap 30. The depth of the shock-absorbing grooves 42 with respect to a thickness of the shock-absorbing cap 30 may have a greater effect on shock absorption than the number of shock-absorbing grooves 42. In an implementation, the depth of the shock-absorbing groove 42 may be within about 50 % of the thickness of the shock-absorbing cap 30. In other words, the depth of the shock-absorbing groove 42 may be about 50 % or less of the thickness of the shock-absorbing cap 30. Maintaining the depth of the groove at about 50 % or less of the thickness of the shock-absorbing cap 30 may help ensure that the shock-absorbing cap 30 has sufficient strength. In an implementation, the depth may be about 0.1 mm to about 0.25 mm. Maintaining the depth at about 0.1 mm or greater may help ensure that shock-absorbing properties are not reduced. Maintaining the depth at about 0.25 mm or less may help ensure that the shock-absorbing cap 30 has sufficient strength.

As the plurality of shock-absorbing grooves 42 are formed, ribs 43, which may serve as reinforcing members, may be correspondingly formed between the shock-absorbing grooves 42. As shown in FIG. 2, only an upper portion of the edge 34 and the ribs 43 of the shock-absorbing cap 30 may contact the bottom of the case body 10 when the shock-absorbing cap 30 is coupled with the case body 10.

For example, a contact area between the shock-absorbing cap 30 and the case body 10 may be reduced, as compared with a case in which an entire surface of a shock-absorbing cap is in close contact with a case body. Accordingly, shock load applied to the shock-absorbing cap 30 may be transmitted only through the edge 34 and the ribs 43. For example, arrows shown in the ribs 43 and edges 34 represent a path of the shock applied to the shock-absorbing cap 30 and transmitted to the case body 10.

In addition to the structure shown in FIGS. 1 to 3A, in an implementation, two shock-absorbing grooves 42 may be disposed to the left and right of the centre of the shock-absorbing cap 30, as shown in FIG. 3B. In another implementation, two shock-absorbing grooves 42 may be disposed at left and right side ends of the shock-absorbing cap 30, as shown in FIG. 3C. For example, a large shock load due to falling, may be applied particularly to both side ends. Thus, it may be considerably effective to form the shock-absorbing grooves 42 at both side ends. Further, areas of each of the shock-absorbing grooves 42 may be the same. In an implementation, the shock-absorbing cap 30 may be symmetric with respect to the centre, in view of desired shock distribution.

In an implementation, the shock-absorbing cap 30 may include one integral shock-absorbing groove 42, as shown in FIG. 3D. In addition, the structure may be modified in various ways, as long as the contact area between the shock-absorbing cap 30 and the case body 10 is reduced by the shock-absorbing grooves 42.

As described above, the shock-absorbing cap 30 may be made of a synthetic resin, e.g., PC (polycarbonate) or PP (polypropylene). However, polycarbonate may be preferable to polypropylene in terms of strength, for the shock-absorbing grooves 42 in the structure of the present embodiment.

Next, operation and effects achieved in operation of the present embodiment having the above-described configuration will be described.

If a complete product achieved by combining the case body 10 with the shock-absorbing cap 30 having the shock-absorbing grooves 42, as shown in FIG. 2, accidentally falls or external shock is otherwise applied to the bottom of the case body 10, the shock-absorbing cap 30 may primarily absorb the shock, such that the load may be reduced prior to being transmitted to the case body 10.

As described above, the shock-absorbing grooves 42 may be formed on the shock-absorbing cap 30. Thus, the shock load initially applied to the shock-absorbing cap 30 may be naturally dispersed throughout the ribs 43 and the edge 34, except for the shock-absorbing grooves 42.

For example, the load initially applied to the shock-absorbing cap 30 may be transmitted to the case body 10 only through the ribs 43 and the edge 34.

Accordingly, the load transmitted through the ribs 43 may be locally exerted on the bottom of the case body 10; and the load dispersed to the edge 34 of the shock-absorbing cap 30 may be exerted on the edge of the bottom of the case body 10.

As the load applied to the shock-absorbing cap 30 may be locally transmitted to the bottom of the case body 10 through the ribs 43, as described above, the shock applied to the case body 10 may be attenuated ore weakened, as compared with a case in which load is applied to a shock-absorbing cap and an entire bottom of a case body.

Further, since the electrode assembly 50 may not be press-fitted in the case body 10, but rather may include a space between the electrode assembly 50 and an inner side of the case body 10, as shown in FIG. 2, if a load is transferred to the edge 34 of the shock-absorbing cap 30 and transmitted to the edge of the bottom of the case body 10, the load exerted on the edge of the case body 10 may not be directly transmitted to the electrode assembly 50.

For example, the groove-shaped sub-shock absorber 40 may be formed in the shock-absorbing cap 30 in the present embodiment. Thus, load applied to the shock-absorbing cap 30 may be transferred and concentrated to specific portions before being transmitted to the case body 10. As a result, the load applied to the case body 10 and the electrode assembly 50 may be attenuated, thereby protecting a secondary battery including such a structure.

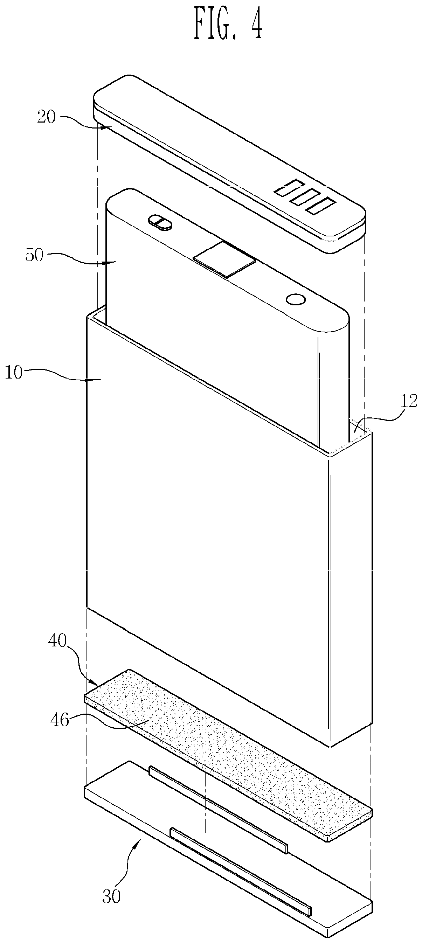

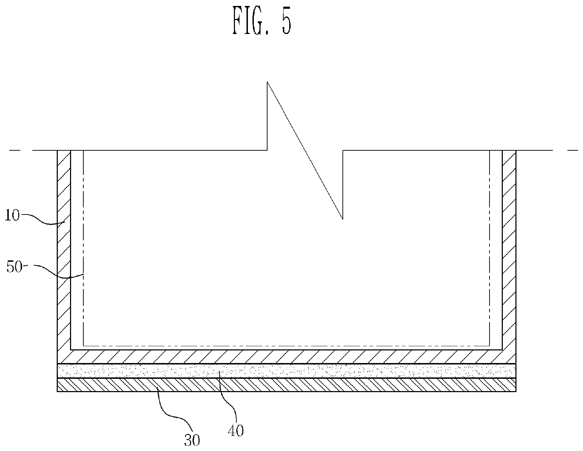

FIG. 4 illustrates an exploded perspective view of a case according to another embodiment. FIG. 5 illustrates a cross-sectional view of an assembled state of the case of FIG. 4. FIGS. 4 and 5 illustrate another embodiment in which a basic design of forming a sub-shock absorber 40 on a shock-absorbing cap 30 is the same as the previous embodiment. However, a difference includes a sub-shock absorber 40 without shock-absorbing grooves 42, but rather a specific plate.

For example, the sub-shock absorber 40 according to the present embodiment may be formed of a simple rectangular plate, as shown in FIG. 4. Accordingly, the shock-absorbing cap 30 may have a flat top.

For example, a shock-absorbing block 46 may be formed of a plate having an area about the same as an area of a top of the shock-absorbing cap 30. In an implementation, the shock-absorbing block 46 may be made of a material that is more elastic than the shock-absorbing cap 30. In an implementation, flexible materials, e.g., rubber, may be used and may have self-shock absorbing ability.

The shock-absorbing block 46 may be stacked on top of the shock-absorbing cap 30 and may be between the top of the shock-absorbing cap 30 and the bottom of the case body 10, when the shock-absorbing cap 30 is combined with the case body 10, as shown in FIG. 5.

In this configuration, the shock-absorbing block 46 and the shock-absorbing cap 30 may be fixed by bonding and then coupled with the case body 10.

Further, although the shock-absorbing block 46 may be made of a flexible or elastic material, e.g., rubber, an adhesive, rather than the rubber, may function as a shock-absorbing block. In an implementation, a double shock-absorbing block may be implemented by applying an adhesive on the flexible material.

If an external shock is applied to a lower portion of the case body 10, the load may be primarily attenuated by the shock-absorbing cap 30 and then secondarily attenuated by the shock-absorbing block 46, before being transmitted to the case body 10.

Accordingly, the load transmitted through the shock-absorbing cap 30 may be exerted in the case body 10, with a magnitude thereof sufficiently reduced. Thus, damage to the case body 10 and the electrode assembly 50 therein may be correspondingly reduced.

Although not illustrated, it is also possible to achieve higher shock-absorbing efficiency by using a plurality of stacked shock-absorbing blocks 46.

For example, implementing the sub-shock absorber 40 including the shock-absorbing block 46 may not result in a change in design of the shock-absorbing cap 30. In particular, different from the previous embodiment, omitting formation of the shock-absorbing grooves 42 on the shock-absorbing cap 30 may simplify manufacturing.

In addition, the present embodiment may achieve a load distribution effect due to, e.g., shock-absorbing grooves, as in the previous embodiment, when the load is transmitted through the shock-absorbing block 46 that includes shock-absorbing grooves 42 on the shock-absorbing block 46. In this case, the shock-absorbing grooves 42 may be formed through the shock-absorbing block 46.

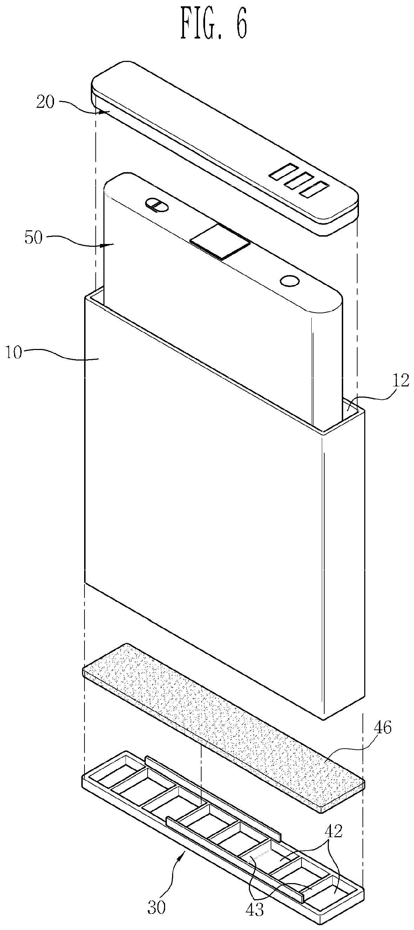

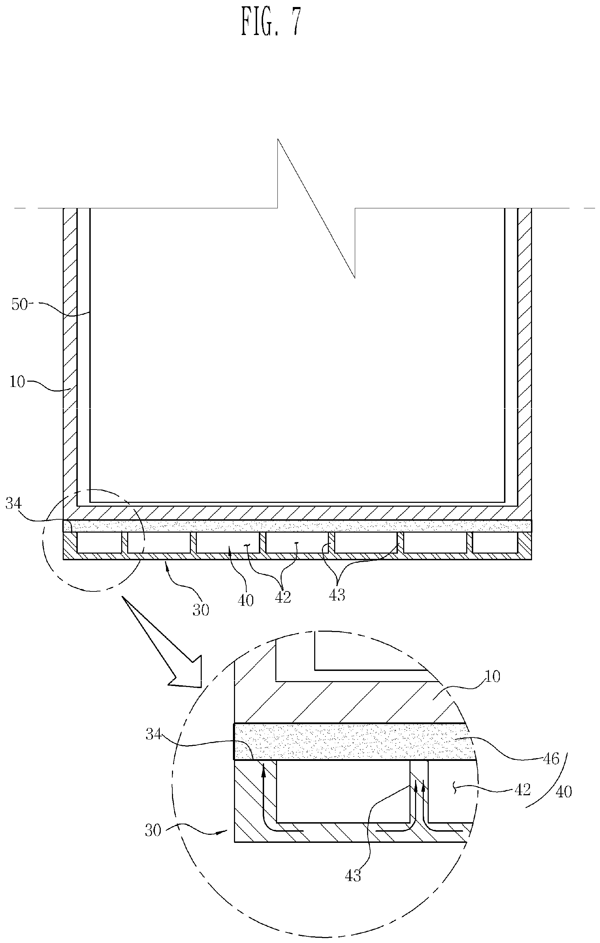

FIG. 6 illustrates an exploded perspective view of a case according to yet another embodiment. FIG. 7 illustrates a cross-sectional view of an assembled state of the case of FIG. 6. For example, FIGS. 6 and 7 illustrate views showing a case, which includes combined structures of the previous embodiments.

For example, the sub-shock absorber 40 of the present embodiment may include the shock-absorbing grooves 42 on the shock-absorbing cap 30 as well as the shock-absorbing block 46 stacked on the top of the shock-absorbing cap 30.

In this configuration, the shape and number of the shock-absorbing grooves 42 may be determined by modifications described with reference to the previous embodiments. In addition, the structure and material of the shock-absorbing block 46 may be the same as in the previous embodiment.

With the sub-shock absorber 40 included in the structure, as shown in FIG. 7, load initially applied to the shock-absorbing cap 30 may be transferred
and concentrated to the ribs 43 and the edge 34 by the shock-absorbing groove 42 prior to being
transmitted to the shock-absorbing block 46. Then, the load may be attenuated again by the self-shock absorbing properties of the shock-absorbing block 46 before being transmitted to the case body 10. For example, arrows shown in the ribs 43 and edges 34 represent a path of the shock applied to the shock-absorbing cap 30 and transmitted to the shock-absorbing block 46.

For example, effects of shock-absorbing by the shock-absorbing grooves 42 and the shock-absorbing block 46 may be simultaneously achieved; and shock-absorbing efficiency may be increased.

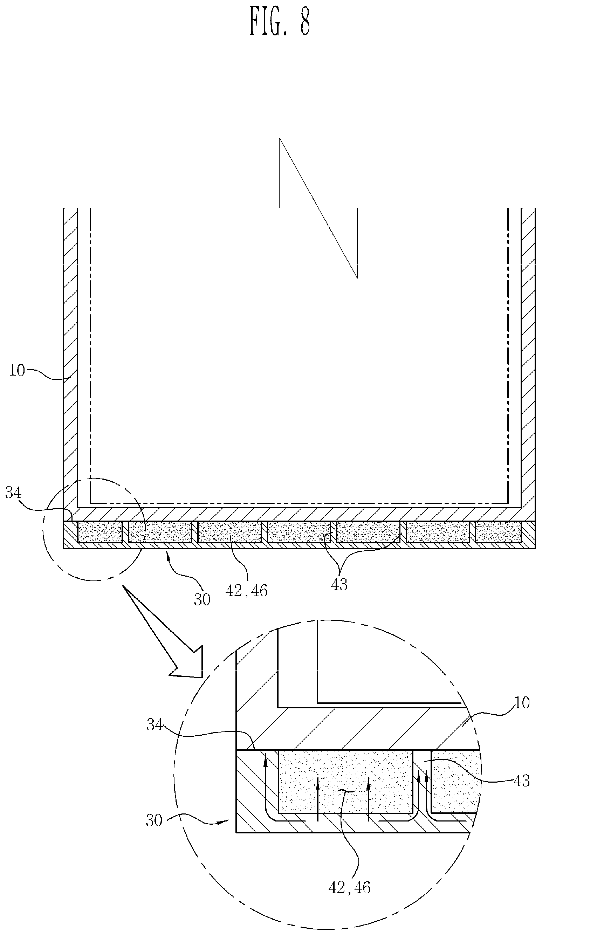

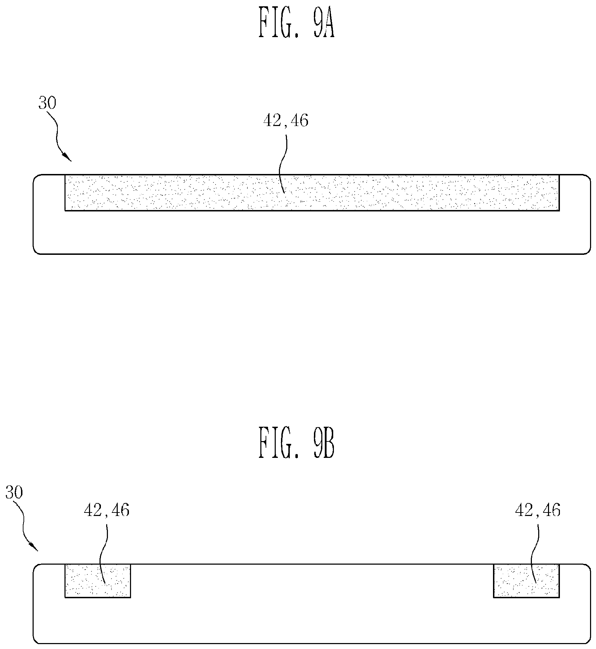

FIG. 8 illustrates a cross-sectional view of a case according to still another embodiment. FIGS. 9A and 9B illustrate enlarged cross-sectional views of modified examples of the shock-absorbing cap of FIG. 8. For example, FIGS. 8 and 9 illustrate views in which the basic configuration is the same as that of the previous embodiment using both the shock-absorbing grooves and the shock-absorbing block, but a mounting structure for the shock absorbing block is modified.

For example, shock-absorbing grooves 42 may be formed on the shock-absorbing cap 30; and shock-absorbing blocks 46 may fill in the shock-absorbing grooves 42.

According to this structure, shock initially applied to the shock-absorbing cap 30 may be transmitted to the shock-absorbing blocks 46 in the shock-absorbing grooves 42 while being distributed to the ribs 43 and the edge 34. Accordingly, a magnitude of the shock may be reduced by the self-shock absorbing properties of the shock-absorbing blocks 46.

For example, a load applied to the shock-absorbing cap 30 may be transferred to the ribs 43 and the edge 34 with the magnitude reduced by the shock-absorbing blocks 46. Then, the load may be transmitted to the case body 10 such that substantially the same shock-absorbing effect as the previous embodiment may be achieved. For example, arrows shown in the ribs 43, edges 34, and shock-absorbing grooves 42/shock-absorbing blocks 46 represent a path of the shock applied to the shock-absorbing cap 30 and transmitted to the case body 10.

As described above, since the shock-absorber 40 has may have a structure including the shock-absorbing blocks 46 filled in the shock-absorbing grooves 42, it is possible to prevent a size of the secondary battery from being increased by a thickness of the shock-absorbing blocks 46 on the shock-absorbing cap 30, as in the previous embodiment.

FIG. 9A illustrates one shock-absorbing groove 42 formed on the shock-absorbing cap 30 and the elastic shock-absorbing block 46 being seated in the shock-absorbing groove 42. FIG. 9B illustrates shock-absorbing grooves 42 formed at both side ends of the shock-absorbing cap 30 and shock-absorbing blocks 46, which may include, e.g., rubber, adhesives, or elastic members, in the shock-absorbing grooves 42.

The embodiments may provide advantages over a structure in which a specific shock-absorbing member is provided, but a plate member is simply attached to the bottom of the case body by a label tape. For example, according to the embodiments, when the secondary battery, e.g., falls, shock applied to the bottom of the case body may be locally transmitted around edges of the bottom, thus avoiding adverse effects on the electrode assembly. In particular, shock applied to the bottom of the case may be dissipated not throughout the entire case but rather localized to edges and/or ribs. Thus, serious damage to the secondary battery itself may be prevented even when the shock is repeated.

The embodiments provide a case for a secondary battery capable of preventing damage to a case body and an electrode assembly therein by including a sub-shock absorber in a shock-absorbing cap to improve shock-absorbing efficiency, when external shock is applied.

The embodiments provide a case for a secondary battery capable of preventing damage to the case body and the electrode assembly therein and improving safety of the secondary battery by transferring shock applied to the shock-absorbing cap to ends thereof, rather than throughout the shock-absorbing cap, so that any damage to the case may be relegated to ends thereof.

The embodiments may improve shock-absorbing efficiency when external shock is applied by including a sub-shock absorber in a shock-absorbing cap.

For example, a contact area between the shock-absorbing cap and the case body may be reduced by forming the sub-shock absorber in a groove on the shock-absorbing cap. Thus, load applied to the case body may be more attenuated by dispersing the shock throughout the shock-absorbing cap.

Further, it is possible to reduce shock transmission to the case body by implementing the sub-shock absorber in a flexible plate.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A case for a secondary battery, the case comprising:
a case body (10) having a space for receiving an electrode assembly; and
a shock-absorbing cap (30) coupled to the bottom of the case body,
wherein the shock-absorbing cap (30) includes:
a secondary shock absorber (40), the secondary shock absorber being configured to distribute and transmit shock applied to the bottom of the shock-absorbing cap (30); and
one or more connecting protrusions (32) on the edges of the shock-absorbing cap, the connecting protrusions extending along and covering a side of the bottom of the case body,
wherein the secondary shock absorber (40) includes a plurality of shock-absorbing recesses (42) configured such that the bottom of the case body and the bottom of the shock-absorbing cap are spaced apart at least by the depth of the shock-absorbing recesses when the shock-absorbing cap is coupled with the case body,
wherein the shock-absorbing cap further includes connection ribs (43) between the shock-absorbing recesses, and
wherein the connection ribs (43) and the edges (34) of the shock-absorbing cap contact the bottom of the case body such that shock applied to the bottom of the shock-absorbing cap is distributed and transmitted to the case body through the connection ribs and the edges.

2. The case as claimed in claim 1, wherein the plurality of shock-absorbing recesses are spaced at regular intervals.

3. The case as claimed in claim 2, wherein each of the plurality of shock-absorbing recesses has the same area.

4. The case as claimed in claim 1, wherein the plurality of shock-absorbing recesses are symmetrically disposed about the centre of the shock-absorbing cap.

5. The case as claimed in claim 1, wherein the plurality of the shock-absorbing recesses are disposed at opposite side ends of the shock-absorbing cap.

6. The case as claimed in any one of claims 1 to 5, further comprising shock-absorbing blocks (46) in the shock-absorbing recesses (42).

7. The case as claimed in claim 6, wherein the shock-absorbing blocks include an elastic body, the elastic body having an elasticity greater than an elasticity of the shock-absorbing case.

8. The case as claimed in claim 7, wherein the elastic body includes a rubber and/or an adhesive.

9. The case as claimed in any one of claims 2 to 8, wherein the depth of the shock-absorbing recesses is about 50 % or less of the thickness of the shock-absorbing cap.

10. The case as claimed in claim 9, wherein the depth is about 0.1 mm to about 0.25 mm.

11. The case as claimed in any one of the preceding claims, wherein the secondary shock absorber (40) comprises a shock-absorbing block (46) on top of the shock-absorbing cap.

12. The case as claimed in claim 11, wherein the shock-absorbing block is made of a material having an elasticity greater than an elasticity of the shock-absorbing cap.

## Patentansprüche

1. Gehäuse für eine Sekundärbatterie, wobei das Gehäuse umfasst:
einen Gehäusekörper (10) mit einem Raum zum Aufnehmen einer Elektrodenanordnung; und eine an den Boden des Gehäusekörpers gekoppelte Stoßdämpfungskappe (30),
wobei die Stoßdämpfungskappe (30) Folgendes enthält:
einen sekundären Stoßdämpfer (40), wobei der sekundäre Stoßdämpfer dazu ausgestaltet ist, auf den Boden der Stoßdämpfungskappe (30) angewendete Stöße weiterzugeben und zu übertragen; und
eine oder mehrere Verbindungsvorsprünge (32) auf der Seite der Stoßdämpfungskappe, wobei sich die Verbindungsvorsprünge entlang einer Seite des Bodens des Gehäusekörpers erstrecken und diese bedecken,
wobei der sekundäre Stoßdämpfer (40) eine Mehrzahl von stoßdämpfenden Ausnehmungen (42) enthält, die so ausgestaltet sind, dass der Boden des Gehäusekörpers und der Boden der Stoßdämpfungskappe mindestens um die Tiefe der stoßdämpfenden Ausnehmungen voneinander beabstandet sind, wenn die Stoßdämpfungskappe mit dem Gehäusekörper gekoppelt ist,
wobei die Stoßdämpfungskappe ferner Verbindungsrippen (43) zwischen den stoßdämpfenden Ausnehmungen enthält und
wobei die Verbindungsrippen (43) und die Kanten (34) der Stoßdämpfungskappe so in Kontakt mit dem Boden des Gehäusekörpers stehen, dass auf den Boden der Stoßdämpfungskappe (30) angewendete Stöße durch die Verbindungsrippen und die Kanten an den Gehäusekörper weitergegeben und übertragen werden.

2. Gehäuse nach Anspruch 1, wobei die Mehrzahl von stoßdämpfenden Ausnehmungen gleichmäßig beabstandet sind.

3. Gehäuse nach Anspruch 2, wobei jede der Mehrzahl von stoßdämpfenden Ausnehmungen dieselbe Fläche aufweist.

4. Gehäuse nach Anspruch 1, wobei die Mehrzahl von stoßdämpfenden Ausnehmungen symmetrisch um die Mitte der Stoßdämpfungskappe angeordnet sind.

5. Gehäuse nach Anspruch 1, wobei die Mehrzahl der stoßdämpfenden Ausnehmungen an entgegengesetzten Enden der Stoßdämpfungskappe angeordnet sind.

6. Gehäuse nach einem der Ansprüche 1 bis 5, ferner umfassend stoßdämpfende Blöcke (46) in den stoßdämpfenden Ausnehmungen (42).

7. Gehäuse nach Anspruch 6, wobei die stoßdämpfenden Blöcke einen elastischen Körper enthalten, wobei der elastische Körper eine Elastizität aufweist, die größer ist als eine Elastizität des stoßdämpfenden Gehäuses.

8. Gehäuse nach Anspruch 7, wobei der elastische Körper einen Gummi und/oder einen Klebstoff enthält.

9. Gehäuse nach einem der Ansprüche 2 bis 8, wobei die Tiefe der stoßdämpfenden Ausnehmungen etwa 50 % oder weniger der Dicke der Stoßdämpfungskappe beträgt.

10. Gehäuse nach Anspruch 9, wobei die Tiefe etwa 0,1 mm bis etwa 0,25 mm beträgt.

11. Gehäuse nach einem der vorangehenden Ansprüche, wobei der sekundäre Stoßdämpfer (40) einen stoßdämpfenden Block (46) auf der Stoßdämpfungskappe umfasst.

12. Gehäuse nach Anspruch 11, wobei der stoßdämpfende Block aus einem Material hergestellt ist, das eine Elastizität aufweist, die größer ist als eine Elastizität der Stoßdämpfungskappe.

## Revendications

1. Boîtier pour batterie secondaire, comprenant :
un corps de boîtier (10) ayant un espace pour recevoir un ensemble d'électrodes ; et
un capuchon absorbant les chocs (30) couplé à la partie inférieure du corps de boîtier,
dans lequel le capuchon absorbant les chocs (30) comporte :
un élément secondaire (d'absorption de chocs 40), l'élément secondaire d'absorption de chocs étant configuré pour répartir et transmettre un choc appliqué à la partie inférieure du capuchon absorbant les chocs (30) ; et
une ou plusieurs saillie (s) de liaison (32) sur les bords du capuchon absorbant les chocs, les saillies de liaison s'étendant le long d'un côté de la partie inférieure du corps de boîtier et recouvrant celui-ci,
dans lequel l'élément secondaire d'absorption de chocs (40) comporte une pluralité d'évidements absorbant les chocs (42) configurés de sorte que la partie inférieure du corps de boîtier et la partie inférieure du capuchon absorbant les chocs soient espacées au moins de la profondeur des évidements absorbant les chocs lorsque le capuchon absorbant les chocs est couplé au corps de boîtier,
dans lequel le capuchon absorbant les chocs comporte en outre des nervures de liaison (43) entre les évidements absorbant les chocs, et
dans lequel les nervures de liaison (43) et les bords (34) du capuchon absorbant les chocs sont en contact avec la partie inférieure du corps de boîtier de sorte qu'un choc appliqué à la partie inférieure du capuchon absorbant les chocs soit réparti et transmis au corps de boîtier par l'intermédiaire des nervures de liaison et les bords.

2. Boîtier tel que revendiqué dans la revendication 1, dans lequel la pluralité d'évidements absorbant les chocs sont espacés à intervalles réguliers.

3. Boîtier tel que revendiqué dans la revendication 2, dans lequel chacun de la pluralité d'évidements absorbant les chocs a la même surface.

4. Boîtier tel que revendiqué dans la revendication 1, dans lequel la pluralité d'évidements absorbant les chocs sont disposés de manière symétrique autour du centre du capuchon absorbant les chocs.

5. Boîtier tel que revendiqué dans la revendication 1, dans lequel la pluralité d'évidements absorbant les chocs sont disposés à des extrémités latérales opposées du capuchon absorbant les chocs.

6. Boîtier tel que revendiqué dans l'une quelconque des revendications 1 à 5, comprenant en outre des blocs absorbant les chocs (46) dans les évidements absorbant les chocs (42).

7. Boîtier tel que revendiqué dans la revendication 6, dans lequel les blocs absorbant les chocs comportent un corps élastique, le corps élastique ayant une élasticité supérieure à celle du boîtier absorbant les chocs.

8. Boîtier tel que revendiqué dans la revendication 7, dans lequel le corps élastique comporte un caoutchouc et/ou un adhésif.

9. Boîtier tel que revendiqué dans l'une quelconque des revendications 2 à 8, dans lequel la profondeur des évidements absorbant les chocs est inférieure ou égale à environ 50% de l'épaisseur du capuchon absorbant les chocs.

10. Boîtier tel que revendiqué dans la revendication 9, dans lequel la profondeur est comprise entre environ 0,1 mm et environ 0,25 mm.

11. Boîtier tel que revendiqué dans l'une quelconque des revendications précédentes, dans lequel l'élément secondaire d'absorption de chocs (40) comprend un bloc absorbant les chocs (46) au-dessus du capuchon absorbant les chocs.

12. Boîtier tel que revendiqué dans la revendication 11, dans lequel le bloc absorbant les chocs est réalisé en un matériau ayant une élasticité supérieure à celle du capuchon absorbant les chocs.
